# FASCICULE DE BREVET EUROPEEN

(11) **EP 4 203 270 B1**
(45) Date de publication et mention de la délivrance du brevet: **20.03.2024**
(21) Numéro de dépôt: 22215391.8
(22) Date de dépôt: 21.12.2022
(51) Int. Cl.: H02K 5/15, H02K 9/06

(54) **MOTEUR ÉLECTRIQUE ET VÉHICULE DE TRANSPORT EN COMMUN COMPORTANT UN TEL MOTEUR**
ELEKTROMOTOR UND FAHRZEUG ZUM ÖFFENTLICHEN PERSONENVERKEHR MIT EINEM SOLCHEN MOTOR
ELECTRIC MOTOR AND PUBLIC TRANSPORT VEHICLE COMPRISING SUCH A MOTOR

(30) Priorité: 22.12.2021 FR 2114251
(43) Date de publication de la demande: 28.06.2023
(73) Titulaire: ALSTOM Holdings, 93400 Saint-Ouen-sur-Seine (FR)
(72) Inventeur: RANDRIA, Andry-Mamy, 25000 BESANCON (FR); GUIGNIER, Gilles, 90000 BELFORT (FR); SOUGH, Mohamed-Laid, 25320 TORPES (FR)
(74) Mandataire: Lavoix

(56) Documents cités:
- WO-A1-2017/108562
- CN-A- 110 474 470
- FR-A1- 2 491 269
- US-A1- 2012 212 086

## Description

La présente invention concerne un moteur électrique. La présente invention concerne également un véhicule de transport en commun comportant un tel moteur.

Des moteurs électriques comportant un rotor et un stator guidant le rotor en rotation sont utilisés dans de nombreuses applications. Le stator comporte des éléments configurés pour mettre le rotor en rotation, par exemple par l'application d'un champ magnétique, cependant ces éléments ont tendances à échauffer le moteur de manière non négligeable, notamment lorsque le moteur est utilisé pour des applications requérant des puissances élevées telles que la propulsion de véhicules électriques.

Afin de refroidir le moteur, il est connu, par exemple du document US2012212086 A1, de monter sur l'arbre du rotor un ventilateur entraîné en rotation par le rotor. Lors de sa rotation, le ventilateur injecte un flux d'air dans le moteur, flux d'air qui est ensuite guidé par le châssis du stator pour assurer un refroidissement optimal des différents éléments du moteur.

Le stator comporte en général un corps cylindrique et un ou deux flasques fixés aux deux extrémités du corps et servant à supporter les roulements guidant le rotor en rotation. Les deux flasques délimitent également deux ouvertures aux extrémités du stator.

Le ventilateur présente en général une bouche circulaire, comportant par exemple un ensemble de pales, disposée à une extrémité du moteur au niveau d'une des ouvertures délimitées par les flasques. Afin de maximiser l'efficacité du refroidissement, le ventilateur est monté de manière à ce que le jeu entre sa surface externe et le flasque qui l'entoure soit très faible, notamment inférieur ou égal à 2 millimètres. Cela permet alors de limiter les flux d'air sortant du moteur à travers l'espace entre le ventilateur et le flasque, et donc de s'assurer que le flux généré par la rotation du ventilateur participe bien au refroidissement.

Cependant, cet arrangement pose des contraintes importantes sur la conception du moteur. En effet, bien que des types de ventilateurs différents puissent être utilisés pour des applications distinctes qui présentent par exemple plus ou moins de risque de surchauffe, il est difficile de combiner des ventilateurs de différents types avec un même châssis. En effet, le diamètre extérieur du ventilateur doit toujours correspondre au diamètre intérieur du flasque pour présenter une étanchéité suffisante. Ainsi, il est nécessaire soit d'utiliser un flasque spécialement adapté au type précis de ventilateur utilisé, soit de s'assurer que les diamètres externes des ventilateurs sont tous identiques afin d'être compatibles avec le même flasque.

Il existe donc un besoin pour un moteur électrique comportant un ventilateur, qui permette une meilleure adaptabilité à des types de ventilateurs différents.

A cet effet, il est proposé un moteur électrique comportant un rotor et un stator configuré pour guider le rotor en rotation autour d'un axe, le stator comportant un châssis entourant le rotor dans un plan perpendiculaire à l'axe et délimitant dans ledit plan une chambre accueillant au moins partiellement le rotor, le châssis s'étendant selon une direction parallèle à l'axe entre une première extrémité et une deuxième extrémité, la première extrémité délimitant une ouverture reliant la chambre à l'extérieur du châssis, le rotor comportant un arbre mobile en rotation autour de l'axe et un ventilateur solidaire de l'arbre, le ventilateur étant configuré pour générer un flux d'air circulant à travers l'ouverture lorsque le ventilateur est entraîné en rotation par l'arbre, le stator comportant, en outre, un organe d'obturation s'étendant radialement entre une extrémité externe fixée à la première extrémité et une extrémité interne et étant configuré pour obturer l'ouverture entre l'extrémité externe et l'extrémité interne, l'extrémité interne de l'organe d'obturation délimitant une portion interne de l'ouverture, le ventilateur étant configuré pour que le flux d'air traverse la portion interne,
le moteur étant caractérisé en ce que
- l'organe d'obturation (27) comporte une plaque (75) et un pavillon (80),
- le ventilateur (100) comporte une bouche (105) et un ensemble d'ailettes (110), la bouche (105) délimitant une entrée (120) du ventilateur (100), le ventilateur (100) étant configuré pour que le flux d'air généré traverse l'entrée (120) pour pénétrer dans la chambre (28),
- la bouche (105) présente une arête interne (125) définissant un diamètre d'entrée de l'entrée (120) du ventilateur (100), l'arête interne (125) entourant le pavillon (80) dans un plan perpendiculaire à l'axe (A).

Selon des modes de réalisation avantageux mais non obligatoires, le moteur présente une ou plusieurs des caractéristiques suivantes, prise(s) isolément ou selon toutes les combinaisons techniquement possibles :
- le châssis comporte un corps cylindrique et deux flasques, le corps étant interposé entre les deux flasques selon une direction parallèle à l'axe, l'un des flasques délimitant l'ouverture ;
- le moteur comporte en outre un capteur configuré pour mesurer une vitesse de rotation du rotor, le capteur étant au moins partiellement interposé entre le ventilateur et le châssis selon une direction radiale perpendiculaire à l'axe du rotor ;
- le rotor comporte un élément solidaire en rotation de l'arbre, l'élément présentant un périmètre, le périmètre comportant un ensemble de marqueurs équirépartis angulairement le long du périmètre, le capteur étant configuré pour détecter le passage d'un marqueur en regard du capteur et pour calculer la vitesse de rotation en fonction du nombre de passages détectés pendant une durée de mesure ;
- une distance, mesurée selon une direction perpendiculaire à l'axe, entre le châssis et le ventilateur, est supérieure ou égale à 5 millimètres ;
- la plaque s'étend dans un plan perpendiculaire à l'axe, la plaque étant délimitée dans ledit plan par deux cercles concentriques centrés sur l'axe ;
- la plaque présente une face interne délimitée par le plus petit des deux cercles concentriques, le pavillon s'étendant à partir de la face interne selon la direction parallèle à l'axe ;
- le pavillon s'étend selon la direction parallèle à l'axe entre une troisième extrémité et une quatrième extrémité, la quatrième extrémité étant décalée vers l'intérieur de la chambre par rapport à la troisième extrémité, le ventilateur présentant une extrémité décalée vers l'extérieur de la chambre selon la direction parallèle à l'axe par rapport à la quatrième extrémité ;
- le ventilateur présente une bouche à travers laquelle le flux d'air circule lorsque le ventilateur est mis en rotation, la bouche présentant une arête interne délimitant la bouche dans un plan perpendiculaire à l'axe, la bouche présentant un diamètre de bouche, l'extrémité interne de l'organe d'obturation présentant un diamètre interne, une différence entre le diamètre de bouche et le diamètre interne étant inférieure ou égale à 4 millimètres.

Il est également proposé un véhicule de transport en commun comportant un moteur électrique tel que précédemment décrit.

Des caractéristiques et avantages de l'invention apparaitront à la lecture de la description qui va suivre, donnée uniquement à titre d'exemple non limitatif et faite en référence aux dessins annexés, sur lesquels :
- la figure 1 est une vue en coupe partielle d'un exemple de moteur selon l'invention,
- la figure 2 est une vue éclatée partielle du moteur de la figure 1, et
- la figure 3 est une vue agrandie de la partie III de la figure 1.

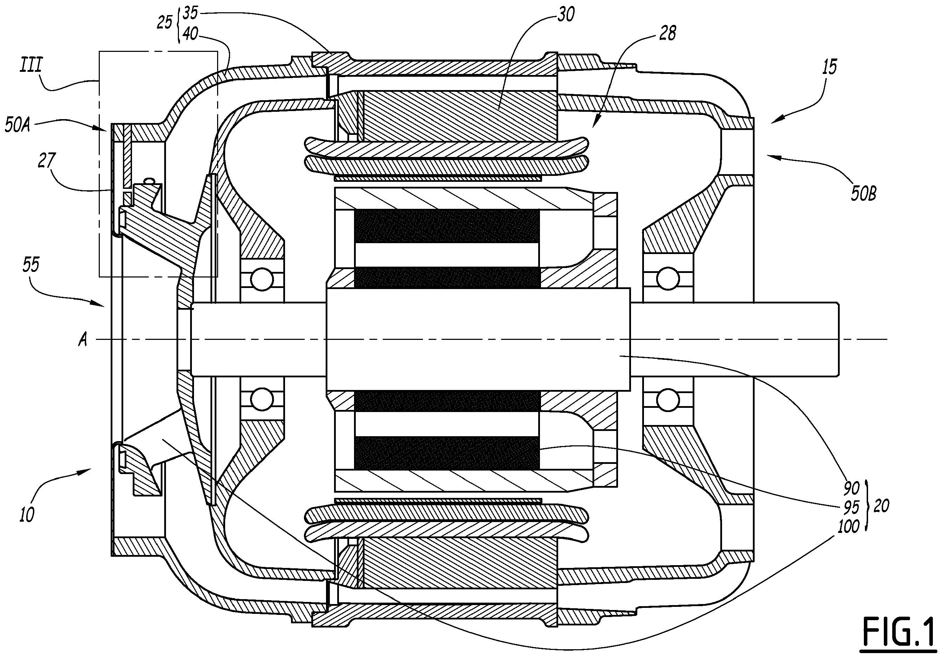

Un moteur électrique 10 est représenté partiellement en coupe sur la figure 1.

Le moteur électrique 10 est, par exemple, un moteur embarqué dans un véhicule, notamment un véhicule électrique, tel qu'un véhicule de transport en commun. Les trains, les tramways, les trolleybus et les bus sont des exemples de véhicules de transport en commun.

Le moteur 10 est, par exemple, configuré pour propulser le véhicule.

Le moteur 10 comporte un stator 15, un rotor 20 et un capteur 22.

Le stator 15 est configuré pour guider le rotor 20 en rotation autour d'un axe A. Le stator 15 est, en outre, configuré pour exercer sur le rotor 20 une force tendant à mettre le rotor 20 en rotation.

Le stator 15 comporte un châssis 25, un organe d'obturation 27 et un premier aimant 30.

Le châssis 25 délimite une chambre 28 dans laquelle le rotor 20 est au moins partiellement accueilli.

Le châssis 25 est réalisé en un matériau métallique, notamment en acier, en fonte ou en alliage d'aluminium.

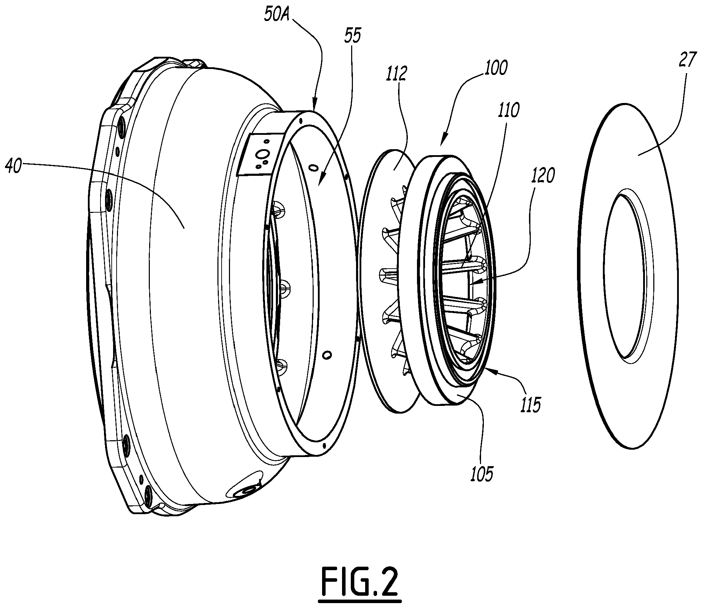

Le châssis 25 comporte un corps 35 et au moins un flasque 40, notamment deux flasques 40. Un flasque 40 est visible notamment en détails sur la figure 2.

Le châssis 25 présente une première extrémité 50A et une deuxième extrémité 50B, ces deux extrémités 50A, 50B délimitant le châssis 25 selon une direction parallèle à l'axe A.

En particulier, la première extrémité 50A délimite une ouverture 55 reliant la chambre 28 à l'extérieur du châssis 25.

L'ouverture 55 est, par exemple, une ouverture circulaire centrée sur l'axe A. En particulier, l'ouverture 55 s'étend dans un plan perpendiculaire à l'axe A.

Le corps 35 est cylindrique et s'étend selon l'axe A. Par exemple, le corps 35 présente une section circulaire, toutefois la forme du corps 35 est susceptible de varier.

En particulier, le corps 35 est centré sur l'axe A.

Le corps 35 entoure le rotor 20 dans un plan perpendiculaire à l'axe A. En particulier, le corps 35 délimite une portion de la chambre 28 accueillant le rotor 20 dans un tel plan, cette portion étant notamment cylindrique. En d'autres termes, le corps 35 présente une forme annulaire délimitée par deux surfaces cylindriques concentriques, chacune de ces surfaces s'étendant selon l'axe A et présentant une symétrie de révolution autour de l'axe A.

Le corps 35 est délimité selon la direction parallèle à l'axe A par les deux flasques 40.

En particulier, le corps 35 s'étend selon la direction parallèle à l'axe A entre les deux flasques 40, qui sont fixés au corps 35, notamment chacun à une extrémité respective du corps 35. Le corps 35 est donc interposé entre les deux flasques 40.

Chaque flasque 40 s'étend selon la direction parallèle à l'axe A à partir d'une extrémité du corps 35.

En outre, chaque flasque 40 s'étend radialement, notamment radialement vers l'intérieur, à partir de l'extrémité correspondante du corps 35.

Chaque flasque 40 présente, par exemple, une symétrie de rotation autour de l'axe A.

L'ouverture 55 est, par exemple, délimitée dans un plan perpendiculaire à l'axe A par l'un des flasques 40.

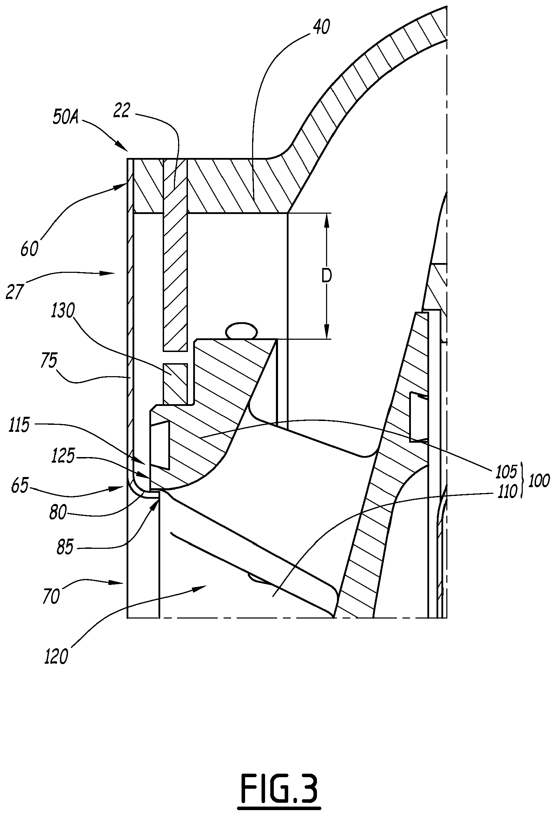

L'organe d'obturation 27 est visible notamment sur la figure 2 et la figure 3.

L'organe d'obturation 27 est configuré pour obturer partiellement l'ouverture 55.

L'organe d'obturation 27 présente une extrémité externe 60 et une extrémité interne 65. L'organe d'obturation 27 s'étend perpendiculairement à l'axe A entre l'extrémité externe 60 et l'extrémité interne 65.

L'organe d'obturation 27 est configuré pour obturer l'ouverture 55, c'est à dire empêcher un flux d'air de traverser l'ouverture 55, entre l'extrémité externe 60 et l'extrémité interne 65.

L'extrémité externe 60 est fixée à la première extrémité 50A.

L'extrémité interne 65 délimite une portion interne 70 de l'ouverture 55.

La portion interne 70 est, notamment, circulaire. En particulier, l'organe d'obturation 27 présente une forme annulaire dans un plan perpendiculaire à l'axe A.

L'organe d'obturation 27 présente un diamètre externe et un diamètre interne.

Le diamètre externe est le diamètre de l'extrémité externe 60. Le diamètre externe est, par exemple, compris entre 250 millimètres et 700 millimètres.

Le diamètre interne est le diamètre de l'extrémité interne 65. Le diamètre interne est, par exemple, compris entre 100 millimètres et 400 millimètres .

L'organe d'obturation 27 est, par exemple, réalisé en un matériau métallique tel que l'acier, l'acier inoxydable ou un alliage d'aluminium.

Le diamètre externe de l'organe d'obturation 27 doit être suffisant pour permettre la liaison mécanique sur le châssis 25 au niveau de la première extrémité 50A. Ainsi, l'organe d'obturation 27 est fixé au châssis 25, notamment à la première extrémité 50A. L'organe d'obturation 27 est, par exemple, boulonné ou vissé au châssis 25.

L'organe d'obturation 27 comporte, par exemple, une plaque 75 et, optionnellement, un pavillon 80.

La plaque 75 s'étend perpendiculairement à l'axe A.

La plaque 75 est, par exemple, une plaque annulaire. En d'autres termes, la plaque 75 est délimitée dans un plan perpendiculaire à l'axe A par deux cercles concentriques. Les deux cercles sont notamment centrés chacun sur l'axe A.

La plaque 75 présente une face interne délimitée par le plus petit des deux cercles concentriques. La face interne délimite la portion interne 70 de l'ouverture 55 dans un plan perpendiculaire à l'axe A. Ainsi, la portion interne 70 est entourée par la face interne dans ledit plan.

La face interne forme alors l'extrémité interne 65 de l'organe d'obturation 27.

Le pavillon 80 s'étend notamment parallèlement à l'axe à partir de la face interne de la plaque 75. En particulier, le pavillon 80 s'étend parallèlement à l'axe entre une troisième extrémité et une quatrième extrémité 85.

Le pavillon 80 est, notamment, cylindrique et centré sur l'axe A.

La troisième extrémité est solidaire de la plaque 75. Par exemple, le pavillon 80 est venu de matière avec la plaque 75 et la troisième extrémité est confondue avec la face interne de la plaque 75.

Dans ce cas, le pavillon 80 est par exemple obtenu par déformation d'une partie de la plaque 75.

La quatrième extrémité 85 est décalée vers l'intérieur de la chambre 28 par rapport à la troisième extrémité.

En complément facultatif, l'organe d'obturation 27 porte en outre une grille non-représentée, s'étendant dans la portion interne 70. Le grille s'étend radialement depuis l'axe A jusqu'à l'organe d'obturation 27. La grille est par exemple portée par le pavillon 80. La grille obture partiellement l'ouverture 55.

Le premier aimant 30 est, de manière connue, configuré pour de manière connue en soi, configuré pour exercer sur le rotor 20 une force destinée à mettre le rotor 20 en rotation.

Le premier aimant 30 comporte, par exemple, un premier électro-aimant et un circuit électrique d'alimentation du premier électro-aimant.

Le rotor 20 comporte un arbre 90, un deuxième aimant 95 et un ventilateur 100.

L'arbre 90 s'étend selon l'axe A. L'arbre 90 est réalisé en un matériau métallique, notamment en acier.

Le deuxième aimant 95 est monté sur l'arbre 90. En particulier, le deuxième aimant 95 est interposé radialement entre le premier aimant 30 et l'arbre 90.

Le deuxième aimant 95 est, de manière connue en soi, configuré pour coopérer avec le premier aimant 30 pour générer une force tendant à mettre le rotor 20 en rotation autour de l'axe A par rapport au stator 15.

Le deuxième aimant 95 est, par exemple, un électro-aimant.

Le ventilateur 100 est solidaire de l'arbre 90 en rotation. Par exemple, le ventilateur 100 est directement monté sur l'arbre 90.

Le ventilateur 100 est configuré pour générer un flux d'air circulant à travers l'ouverture 55, notamment à travers la portion interne 70, lorsque le ventilateur 100 est entraîné en rotation par l'arbre 90. Le flux d'air circule depuis l'extérieur du châssis 25 jusqu'à l'intérieur de la chambre 28.

Le ventilateur 100 comporte, par exemple, une bouche 105 et un ensemble d'ailettes 110. Selon le mode de réalisation représenté sur les figures, le ventilateur comporte, outre la bouche 105 et les ailettes 110, une portion arrière 112.

Le ventilateur 100 est configuré pour que le flux d'air traverse la bouche 105 lorsque le ventilateur 100 est mis en rotation par l'arbre 90.

Une distance D, mesurée selon une direction radiale du rotor 20, donc une direction perpendiculaire à l'axe A, est définie. La distance D est supérieure ou égale à 5 millimètres (mm).

La distance D est mesurée entre le point le plus externe du ventilateur 100 et le point du châssis 25 disposé en regard du point le plus externe. Le point le plus externe est le point du ventilateur 100 le plus éloigné de l'axe A.

Le point du châssis 25 est par exemple un point d'un flasque 40.

La distance D est, par exemple, égale à une différence entre un diamètre interne du flasque 40 et un diamètre externe maximal du ventilateur 100.

Le ventilateur 100 présente une extrémité 115 délimitant le ventilateur 100 selon la direction parallèle à l'axe A. En particulier, l'extrémité 115 délimite le ventilateur 100 du côté correspondant à l'extérieur du châssis 25.

L'extrémité 115 est décalée selon la direction parallèle à l'axe A vers l'extérieur de la chambre 28 par rapport à la quatrième extrémité 85. En particulier, l'extrémité 115 du ventilateur 100 est interposée entre la troisième extrémité et la quatrième extrémité 85.

La bouche 105 délimite une entrée 120 du ventilateur 100. Le ventilateur 100 est configuré pour que le flux d'air généré par le ventilateur 100 traverse l'entrée 120 pour pénétrer dans la chambre 28.

La bouche 105 entoure l'entrée 120 dans un plan perpendiculaire à l'axe A.

Selon un mode de réalisation, la bouche 105 entoure le pavillon 80 dans un plan perpendiculaire à l'axe A.

Il est à noter que selon une variante envisageable, la bouche 105 est entourée par le pavillon 80 dans un plan perpendiculaire à l'axe A.

La bouche 105 est, par exemple, une portion annulaire du ventilateur 100.

La bouche 105 présente une arête interne 125. L'arête interne 125 est formée par la portion de l'extrémité 115 qui délimite l'entrée 120.

L'arête interne 125 est, par exemple, circulaire. L'arête interne 125 est, par exemple, perpendiculaire à l'axe A.

L'arête interne 125 présente un diamètre d'entrée. Le diamètre d'entrée est le diamètre de l'entrée 120 du ventilateur 100.

L'arête interne 125 est interposée selon la direction parallèle à l'axe A entre les troisième et quatrième extrémités du pavillon 80.

L'arête 125 entoure le pavillon 80 dans un plan perpendiculaire à l'axe A.

Une différence entre le diamètre d'entrée du ventilateur 100 et le diamètre interne de l'organe d'obturation 27, (donc le diamètre du pavillon 80) est inférieure ou égale à 4 millimètres, et préférentiellement inférieur à 2 millimètres. En particulier, le diamètre d'entrée est strictement supérieur au diamètre interne.

Les ailettes 110 sont configurées pour générer le flux d'air lorsque le ventilateur 100 est en rotation.

La portion arrière 112 est délimitée selon la direction parallèle à l'axe A par la bouche 105. En particulier, la bouche 105 est interposée entre la portion arrière 112 et la plaque 75 selon la direction parallèle à l'axe A.

La portion arrière 112 présente, par exemple, un diamètre extérieur strictement supérieur au diamètre extérieur de la bouche 105..

Le capteur 22 est configuré pour mesurer une vitesse de rotation du rotor 20.

Le capteur 22 est monté sur le châssis 25. Par exemple, le capteur 22 est monté sur le flasque 40 qui entoure le ventilateur 100.

Le capteur 22 traverse par exemple la paroi du flasque 40 selon une direction radiale du rotor 20.

Le capteur 22 est interposé radialement au moins partiellement entre le châssis 25 et le ventilateur 100, par exemple entre la bouche 105 et le flasque 40 entourant le ventilateur 100.

Notamment, une extrémité du capteur 22 est accueillie dans un volume délimité radialement (donc dans un plan perpendiculaire à l'axe A) par le ventilateur 100, notamment par la bouche 105, et par le châssis 25, notamment par le flasque 40 entourant le ventilateur 100.

Le capteur 22 est, par exemple, un capteur de proximité par effet Hall ou un capteur optique.

Le capteur 22 est, par exemple, configuré pour détecter le passage d'un élément du rotor 20 en regard du capteur 22 lors de la rotation du rotor 20 et pour calculer la vitesse de rotation en fonction de cette détection

Par exemple, le rotor 20 comporte une roue 130 disposée en regard du capteur 22 et solidaire de l'arbre 90 en rotation. La roue 130 est par exemple une roue dentée, présentant un périmètre extérieur comportant un ensemble de marqueurs.

Chaque marqueur est un élément dont le capteur 22 est configuré pour détecter le passage en regard du capteur 22. Le capteur 22 est notamment configuré pour détecter le passage d'un ensemble de marqueurs en regard du capteur 22 pendant une durée temporelle prédéterminée, et pour calculer la vitesse de rotation en fonction du nombre de marqueurs détectés pendant ladite durée.

La roue 130 entoure, par exemple, une portion du ventilateur 100, par exemple la bouche 105. En variante, la roue 130 est surmoulée sur ladite portion du ventilateur 100.

Les marqueurs sont par exemple équirépartis angulairement sur le périmètre de la roue 130.

Chaque marqueur est, par exemple, une dent, c'est-à-dire une saillie portée par le périmètre de la roue 130, une encoche ménagée dans la roue 130 ou encore une zone colorée.

En variante encore, chaque marqueur est directement disposé sur la portion du ventilateur 100, par exemple sur une surface radialement extérieure de la bouche 105.

Grâce à la présence de l'organe d'obturation 27, un même châssis 25, équipé d'un ou deux flasques 40, peut aisément être utilisé avec des ventilateurs 100 de types variés et présentant des diamètres extérieurs différents. En effet, il suffit d'adapter les dimensions de l'organe d'obturation 27 pour rendre le châssis 25 compatible avec le ventilateur 100 choisi, puisque l'organe d'obturation 27 permet d'éviter la sortie du flux d'air hors de la chambre 28 même si le diamètre du ventilateur 100 est très inférieur à celui du châssis 25 en regard du ventilateur 100.

Lorsque le châssis 25 comporte un ou deux flasques 40, le châssis est rendu plus adaptable encore puisqu'un même corps 35 peut être adapté à différentes configurations par le choix de flasques 40 aux formes et dimensions adaptées.

En outre, grâce à l'utilisation de l'organe d'obturation 27, la distance entre le châssis 25 et le ventilateur 100 est augmentée. Ainsi, l'accumulation de poussières dans l'espace entre le ventilateur 100 et le châssis 25 est limitée, et donc l'usure associée du ventilateur 100 ou du châssis 25. En effet, les poussières sont par exemple abrasives, notamment si elles comprennent des particules de sable ou des particules métalliques. Leur présence entre le ventilateur 100 et le châssis entraînerait alors une usure dudit ventilateur 100 ou châssis 25. De plus, si le capteur 22 est présent, puisqu'il est en général disposé dans cet espace, l'usure du capteur 22 est limitée. En outre, le capteur 22 est moins perturbé dans son fonctionnement par de telles poussières, notamment lorsqu'il est configuré pour détecter le passage d'un marqueur en regard dudit capteur 22.

Cela est notamment le cas lorsque la distance D est supérieure ou égale à 5 mm, puisque, lors de la rotation du rotor 20, le mouvement de l'air engendré par le rotor 20 tend à faire dégager d'éventuelles poussières qui se seraient déposées entre le ventilateur 100 et le châssis 25.

Un organe d'obturation 27 comportant une plaque 75 annulaire est particulièrement simple à utiliser et à installer.

Un pavillon 80 permet d'améliorer l'étanchéité du moteur 100, puisque le pavillon 80 permet notamment de pallier à un positionnement imprécis de l'organe d'obturation 27 ou du ventilateur 100. Cela est d'autant plus vrai lorsque l'extrémité 115 du ventilateur 100 est interposée entre les deux extrémités du pavillon 80, puisqu'un mauvais positionnement selon l'axe A est alors compensé. De plus, le faible espace entre le pavillon 80 et le ventilateur 100 permet de réduire sensiblement les fuites d'air.

En outre, la géométrie du pavillon 80 assure un guidage de l'écoulement de l'air en entrée du ventilateur 100. Ceci réduit alors des pertes à l'entrée du ventilateur 100 qui seraient dues à des turbulences. Le bruit produit par l'écoulement de l'air est alors en outre réduit.

Lorsque la différence entre le diamètre interne de l'organe d'obturation 27 et le diamètre extérieur du ventilateur 100 est inférieure ou égale à 2 mm, le ventilateur 100 et l'organe d'obturation 27 coopèrent efficacement pour éviter que l'air injecté par le ventilateur dans la chambre 28 ne s'échappe de manière excessive.

Selon le complément facultatif dans lequel l'organe d'obturation 27 porte la grille, ladite grille empêche l'insertion de corps étrangers par le ventilateur 100 sans pour autant que le flux d'air à travers l'ouverture 55 n'en soit sensiblement affecté.

En outre, le décalage de l'extrémité 115 selon la direction parallèle à l'axe A vers l'extérieur de la chambre 28 par rapport à la quatrième extrémité 85 assure une bonne superposition du ventilateur 100 et du pavillon 80.

## Revendications

1. Moteur électrique (10) comportant un rotor (20) et un stator (15) configuré pour guider le rotor (20) en rotation autour d'un axe (A), le stator (15) comportant un châssis (25) entourant le rotor (20) dans un plan perpendiculaire à l'axe (A) et délimitant dans ledit plan une chambre (28) accueillant au moins partiellement le rotor (20), le châssis (25) s'étendant selon une direction parallèle à l'axe (A) entre une première extrémité (50A) et une deuxième extrémité (50B), la première extrémité (50A) délimitant une ouverture (55) reliant la chambre (28) à l'extérieur du châssis (25), le rotor (20) comportant un arbre (90) mobile en rotation autour de l'axe (A) et un ventilateur (100) solidaire de l'arbre (90), le ventilateur (100) étant configuré pour générer un flux d'air circulant à travers l'ouverture (55) lorsque le ventilateur (100) est entraîné en rotation par l'arbre (90), le stator comportant, en outre, un organe d'obturation (27) s'étendant radialement entre une extrémité externe (60) fixée à la première extrémité (50A) et une extrémité interne (65) et étant configuré pour obturer l'ouverture (55) entre l'extrémité externe (60) et l'extrémité interne (65), l'extrémité interne (65) de l'organe d'obturation (27) délimitant une portion interne (70) de l'ouverture (55), le ventilateur (100) étant configuré pour que le flux d'air traverse la portion interne (70),
le moteur (10) étant **caractérisé en ce que**
- l'organe d'obturation (27) comporte une plaque (75) et un pavillon (80),
- le ventilateur (100) comporte une bouche (105) et un ensemble d'ailettes (110), la bouche (105) délimitant une entrée (120) du ventilateur (100), le ventilateur (100) étant configuré pour que le flux d'air généré traverse l'entrée (120) pour pénétrer dans la chambre (28),
- la bouche (105) présente une arête interne (125) définissant un diamètre d'entrée de l'entrée (120) du ventilateur (100), l'arête interne (125) entourant le pavillon (80) dans un plan perpendiculaire à l'axe (A).

2. Moteur selon la revendication 1, dans lequel le châssis (25) comporte un corps (35) cylindrique et deux flasques (40), le corps (35) étant interposé entre les deux flasques (40) selon une direction parallèle à l'axe (A), l'un des flasques (40) délimitant l'ouverture (55).

3. Moteur selon la revendication 1 ou 2, comportant en outre un capteur (22) configuré pour mesurer une vitesse de rotation du rotor (20), le capteur (22) étant au moins partiellement interposé entre le ventilateur (100) et le châssis (25) selon une direction radiale perpendiculaire à l'axe (A) du rotor (20).

4. Moteur selon la revendication 3, dans lequel le rotor (20) comporte un élément (105 ; 130) solidaire en rotation de l'arbre (90), l'élément (105 ; 130) présentant un périmètre, le périmètre comportant un ensemble de marqueurs équirépartis angulairement le long du périmètre, le capteur (22) étant configuré pour détecter le passage d'un marqueur en regard du capteur (22) et pour calculer la vitesse de rotation en fonction du nombre de passages détectés pendant une durée de mesure.

5. Moteur selon l'une quelconque des revendications 1 à 4, dans lequel une distance (D), mesurée selon une direction perpendiculaire à l'axe, entre le châssis (25) et le ventilateur (100), est supérieure ou égale à 5 millimètres.

6. Moteur selon l'une quelconque des revendications 1 à 5, dans lequel la plaque (75) s'étend dans un plan perpendiculaire à l'axe (A), la plaque (75) étant délimitée dans ledit plan par deux cercles concentriques centrés sur l'axe (A).

7. Moteur selon la revendication 6, dans lequel la plaque (75) présente une face interne délimitée par le plus petit des deux cercles concentriques, le pavillon (80) s'étendant à partir de la face interne selon la direction parallèle à l'axe (A).

8. Moteur selon la revendication 7, dans lequel le pavillon (80) s'étend selon la direction parallèle à l'axe (A) entre une troisième extrémité et une quatrième extrémité (85), la quatrième extrémité (85) étant décalée vers l'intérieur de la chambre (28) par rapport à la troisième extrémité, le ventilateur (80) présentant une extrémité (115) décalée vers l'extérieur de la chambre (28) selon la direction parallèle à l'axe (A) par rapport à la quatrième extrémité (85).

9. Moteur selon la revendication 7 ou 8, dans lequel la bouche (105) présente un diamètre de bouche, l'extrémité interne (65) de l'organe d'obturation (27) présentant un diamètre interne, une différence entre le diamètre de bouche et le diamètre interne étant inférieure ou égale à 4 millimètres.

10. Véhicule de transport en commun, notamment véhicule électrique, comportant un moteur (10) selon l'une quelconque des revendications précédentes.

## Patentansprüche

1. Elektromotor (10) mit einem Rotor (20) und einem Stator (15), der so konfiguriert ist, dass er den Rotor (20) in Drehung um eine Achse (A) führt, wobei der Stator (15) einen Rahmen (25) aufweist, der den Rotor (20) in einer Ebene senkrecht zur Achse (A) umgibt und in dieser Ebene eine Kammer (28) begrenzt, die den Rotor (20) zumindest teilweise aufnimmt, wobei sich der Rahmen (25) in einer Richtung parallel zur Achse (A) zwischen einem ersten Ende (50A) und einem zweiten Ende (50B) erstreckt, wobei das erste Ende (50A) eine Öffnung (55) begrenzt, die die Kammer (28) mit der Außenseite des Rahmens (25) verbindet, der Rotor (20) umfasst eine Welle (90), die um die Achse (A) drehbar ist, und einen Lüfter (100), der fest mit der Welle (90) verbunden ist, wobei der Lüfter (100) so konfiguriert ist, dass er einen Luftstrom erzeugt, der durch die Öffnung (55) hindurchgeht, wenn der Lüfter (100) von der Welle (90) gedreht wird, wobei der Stator außerdem ein Verschlusselement (27) umfasst, das sich radial zwischen einem äußeren Ende (60), das mit dem ersten Ende (50A) verbunden ist und einem inneren Ende (65) erstreckt, und konfiguriert ist, um die Öffnung (55) zwischen dem äußeren Ende (60) und dem inneren Ende (65) zu verschließen, wobei das innere Ende (65) des Verschlusselements (27) einen inneren Abschnitt (70) der Öffnung (55) begrenzt, wobei der Ventilator (100) so konfiguriert ist, dass der Luftstrom durch den inneren Abschnitt (70) hindurchgeht, wobei der Motor (10) **dadurch gekennzeichnet ist, dass**
- das Verschlusselement (27) eine Platte (75) und einen Trichter (80) aufweist,
- der Lüfter (100) eine Mündung (105) und einen Satz von Lamellen (110) aufweist, wobei die Mündung (105) einen Einlass (120) des Lüfters (100) begrenzt, wobei der Lüfter (100) so konfiguriert ist, dass der erzeugte Luftstrom durch den Einlass (120) in die Kammer (28) strömt,
- die Mündung (105) eine innere Kante (125) aufweist, die einen Eintrittsdurchmesser des Einlasses (120) des Lüfters (100) definiert, wobei die innere Kante (125) den Trichter (80) in einer Ebene senkrecht zur Achse (A) umgibt.

2. Motor nach Anspruch 1, bei dem der Rahmen (25) einen zylindrischen Körper (35) und zwei Flansche (40) aufweist, wobei der Körper (35) zwischen den beiden Flanschen (40) in einer Richtung parallel zur Achse (A) angeordnet ist, wobei einer der Flansche (40) die Öffnung (55) begrenzt.

3. Motor nach Anspruch 1 oder 2, der außerdem einen Sensor (22) umfasst, der so konfiguriert ist, dass er eine Drehgeschwindigkeit des Rotors (20) misst, wobei der Sensor (22) zumindest teilweise zwischen dem Lüfter (100) und dem Rahmen (25) in einer radialen Richtung senkrecht zur Achse (A) des Rotors (20) angeordnet ist.

4. Motor nach Anspruch 3, bei dem der Rotor (20) ein Element (105; 130) umfasst, das drehfest mit der Welle (90) verbunden ist, wobei das Element (105; 130) einen Umfang aufweist, wobei der Umfang eine Gruppe von gleichmäßig winkelförmig entlang des Umfangs verteilten Markierungen umfasst. Der Sensor (22) ist so konfiguriert, dass er den Durchgang eines Markers gegenüber dem Sensor (22) erfasst und die Rotationsgeschwindigkeit in Abhängigkeit von der Anzahl der erfassten Durchgänge während einer Messdauer berechnet.

5. Motor nach einem der Ansprüche 1 bis 4, wobei ein Abstand (D), gemessen in einer Richtung senkrecht zur Achse, zwischen dem Rahmen (25) und dem Lüfter (100) größer oder gleich 5 Millimeter ist.

6. Motor nach einem der Ansprüche 1 bis 5, bei dem sich die Platte (75) in einer Ebene senkrecht zur Achse (A) erstreckt, wobei die Platte (75) in dieser Ebene von zwei konzentrischen Kreisen begrenzt wird, die auf der Achse (A) zentriert sind.

7. Motor nach Anspruch 6, bei dem die Platte (75) eine Innenfläche aufweist, die durch den kleineren der beiden konzentrischen Kreise begrenzt wird, wobei sich der Trichter (80) von der Innenfläche aus in der Richtung parallel zur Achse (A) erstreckt.

8. Motor nach Anspruch 7, bei dem sich der Trichter (80) in der Richtung parallel zur Achse (A) zwischen einem dritten Ende und einem vierten Ende (85) erstreckt, wobei das vierte Ende (85) in Bezug auf das dritte Ende in das Innere der Kammer (28) versetzt ist. Wobei der Lüfter (80) ein Ende (115) aufweist, das bezüglich der Kammer (28) nach außen versetzt ist und in einer Richtung parallel zur Achse (A) bezüglich des vierten Endes (85) verläuft.

9. Motor nach Anspruch 7 oder 8, wobei die Mündung (105) einen Mündungsdurchmesser hat, das innere Ende (65) des Verschlusselements (27) einen Innendurchmesser hat und eine Differenz zwischen dem Mündungsdurchmesser und dem Innendurchmesser weniger als oder gleich 4 Millimeter beträgt.

10. Öffentliches Transportfahrzeug, insbesondere Elektrofahrzeug, umfassend einen Motor (10) nach einem der vorherigen Ansprüche.

## Claims

1. An electric motor (10) comprising a rotor (20) and a stator (15) configured to guide the rotor (20) in rotation about an axis (A), the stator (15) comprising a frame (25) surrounding the rotor (20) in a plane perpendicular to the axis (A) and delimiting in said plane a chamber (28) at least partially accommodating the rotor (20), the frame (25) extending in a direction parallel to the axis (A) between a first end (50A) and a second end (50B), the first end (50A) delimiting an opening (55) connecting the chamber (28) to the outside of the frame (25), the rotor (20) comprising a shaft (90) able to rotate about the axis (A) and a fan (100) secured to the shaft (90), the fan (100) being configured to generate a flow of air circulating through the opening (55) when the fan (100) is rotated by the shaft (90), the stator further comprising a closure member (27) extending radially between an outer end (60) attached to the first end (50A) and an inner end (65) and being configured to close the opening (55) between the outer end (60) and the inner end (65), the inner end (65) of the closure member (27) delimiting an inner portion (70) of the opening (55), the fan (100) being configured so that the air flow passes through the inner portion (70), the motor (10) being **characterised in that**
- the closure member (27) comprises a plate (75) and a roof (80),
- the fan (100) comprises a mouth (105) and a set of blades (110), the mouth (105) delimiting an inlet (120) of the fan (100), the fan (100) being configured so that the air flow generated passes through the inlet (120) to enter the chamber (28),
- the mouth (105) has an inner edge (125) defining an inlet diameter of the inlet (120) of the fan (100), the inner edge (125) surrounding the roof (80) in a plane perpendicular to the axis (A).

2. The motor according to claim 1, wherein the chassis (25) comprises a cylindrical body (35) and two flanges (40), the body (35) being interposed between the two flanges (40) in a direction parallel to the axis (A), one of the flanges (40) delimiting the opening (55).

3. The motor according to claim 1 or 2, further comprising a sensor (22) configured to measure a speed of rotation of the rotor (20), the sensor (22) being at least partially interposed between the fan (100) and the frame (25) in a radial direction perpendicular to the axis (A) of the rotor (20).

4. The motor according to claim 3, wherein the rotor (20) comprises an element (105; 130) integral in rotation with the shaft (90), the element (105; 130) having a perimeter, the perimeter comprising a set of markers distributed at equal angles along the perimeter, the sensor (22) being configured to detect the passage of a marker opposite the sensor (22) and to calculate the speed of rotation as a function of the number of passages detected during a measurement period.

5. The motor according to any one of claims 1 to 4, wherein a distance (D), measured in a direction perpendicular to the axis, between the frame (25) and the fan (100) is greater than or equal to 5 millimetres.

6. The motor according to any one of claims 1 to 5, wherein the plate (75) extends in a plane perpendicular to the axis (A), the plate (75) being bounded in said plane by two concentric circles centred on the axis (A).

7. The motor according to claim 6, wherein the plate (75) has an inner face bounded by the smaller of the two concentric circles, the roof (80) extending from the inner face in the direction parallel to the axis (A).

8. The motor according to claim 7, wherein the roof (80) extends in the direction parallel to the axis (A) between a third end and a fourth end (85), the fourth end (85) being offset inwardly toward the chamber (28) relative to the third end, the fan (80) having an end (115) offset outwardly from the chamber (28) in the direction parallel to the axis (A) with respect to the fourth end (85).

9. The motor according to claim 7 or 8, wherein the mouth (105) has a mouth diameter, the inner end (65) of the closure member (27) having an inner diameter, a difference between the mouth diameter and the inner diameter being less than or equal to 4 millimetres.

10. A public transport vehicle, in particular an electric vehicle, comprising a motor (10) according to any one of the preceding claims.
